(19) **Europäisches Patentamt / European Patent Office / Office européen des brevets**

(11) **EP 4 394 003 A1**

(12) **EUROPEAN PATENT APPLICATION**
published in accordance with Art. 153(4) EPC

(43) Date of publication:
03.07.2024 Bulletin 2024/27

(21) Application number: 22861185.1

(22) Date of filing: 16.08.2022

(51) International Patent Classification (IPC):
$C09D\ 5/00^{(2006.01)}$ $C09D\ 157/12^{(2006.01)}$
$D21H\ 19/20^{(2006.01)}$

(52) Cooperative Patent Classification (CPC):
C09D 5/00; C09D 157/12; D21H 19/20

(86) International application number:
PCT/JP2022/030964

(87) International publication number:
WO 2023/026897 (02.03.2023 Gazette 2023/09)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 23.08.2021 JP 2021135826

(71) Applicant: Mitsui Chemicals, Inc.
Tokyo 104-0028 (JP)

(72) Inventors:
• KAGAWA, Yasuyuki
Sodegaura-shi, Chiba 299-0265 (JP)
• SEO, Akiko
Sodegaura-shi, Chiba 299-0265 (JP)

(74) Representative: Hoffmann Eitle
Patent- und Rechtsanwälte PartmbB
Arabellastraße 30
81925 München (DE)

(54) **COATING MATERIAL FOR IMPARTING MINERAL OIL RESISTANCE AND MULTILAYER BODY**

(57) A mineral-oil-resistance-imparting coating material includes a copolymer of a monomer composition and an aqueous solvent in which the copolymer is dissolved and/or dispersed. The monomer composition contains a nitrile-group-containing unsaturated ethylenic monomer and a carboxy-group-containing unsaturated ethylenic monomer. To the total amount of the monomer composition, the content ratio of the nitrile-group-containing unsaturated ethylenic monomer is 21% by mass or more and 70% by mass or less. To the total amount of the monomer composition, the content ratio of the carboxy-group-containing unsaturated ethylenic monomer is 3% by mass or more and 10% by mass or less.

**EP 4 394 003 A1**

**Description**

TECHNICAL FIELD

The present invention relates to a mineral-oil-resistance-imparting coating material and a laminate.

BACKGROUND ART

Mineral oil is contained in various materials. For example, recycled paper contains mineral oil derived from printing inks. Thus, when recycled paper is used as a packaging material, the mineral oil adheres and impregnates to the packaged object. In the light thereof, it is considered to laminate a mineral oil-resistant coating layer on a material containing mineral oil.

For example, a cardboard packaging produced from mineral oil contaminated paper with a barrier layer is proposed. In the cardboard packaging, the barrier layer is produced from an aqueous polymer dispersion. The aqueous polymer dispersion contains a copolymer. The copolymer is obtained by the emulsion polymerization of alkyl (meth)acrylates, 0.1 to 5% by mass of acid monomers, 0 to 20% by mass of acrylonitrile, and 0 to 10% by mass of further monomers (for example, see Patent Document 1).

Citation List

Patent Document

Patent Document 1: Japanese Unexamined Patent Publication No. 2015-500927

SUMMARY OF THE INVENTION

PROBLEM TO BE SOLVED BY THE INVENTION

Further improvement of mineral oil resistance is required in various industrial fields.

The present invention is a mineral-oil-resistance-imparting coating material capable of imparting an excellent mineral oil resistance and a laminate including a coating layer of the mineral-oil-resistance-imparting coating material.

MEANS FOR SOLVING THE PROBLEM

The present invention [1] includes a mineral-oil-resistance-imparting coating material comprising: a copolymer of a monomer composition containing a nitrile-group-containing unsaturated ethylenic monomer and a carboxy-group-containing unsaturated ethylenic monomer; and an aqueous solvent in which the copolymer is dissolved and/or dispersed, wherein a content ratio of the nitrile-group-containing unsaturated ethylenic monomer is 21% by mass or more and 70% by mass or less, and a content ratio of the carboxy-group-containing unsaturated ethylenic monomer is 3% by mass or more and 10% by mass or less to the total amount of the monomer composition.

The present invention [2] includes the mineral-oil-resistance-imparting coating material described in the above-described [1], wherein the copolymer has a glass-transition temperature of -30°C or more and 100°C or less.

The present invention [3] includes a laminate comprising: recycled paper, and a coating layer of the mineral-oil-resistance-imparting coating material described in the above-described [1] or [2], the coating layer being formed on at least one side of the recycled paper.

EFFECTS OF THE INVENTION

The mineral-oil-resistance-imparting coating material of the present invention includes the copolymer of the monomer composition containing a nitrile-group-containing unsaturated ethylenic monomer and a carboxy-group-containing unsaturated ethylenic monomer in a predetermined ratio. Thus, the mineral-oil-resistance-imparting coating material of the present invention is capable of forming a coating layer with an excellent mineral oil resistance.

The laminate of the present invention includes a coating layer of the above-described mineral-oil-resistance-imparting coating material. Thus, the laminate of the present invention has an excellent mineral oil resistance.

DESCRIPTION OF THE EMBODIMENTS

The mineral-oil-resistance-imparting coating material of the present invention contains a copolymer of a monomer composition and an aqueous solvent in which the copolymer is dissolved and/or dispersed.

The copolymer of the monomer composition is, for example, a (meth)acryl polymer. The (meth)acryl indicates acryl and/or methacryl (the same applies hereinafter).

The monomer composition contains a hard monomer as an essential component. The hard monomer is a monomer of which homopolymer has a relatively high glass-transition temperature (for example, 20°C or more, preferably 200°C or less) (calculated using the FOX equation (the same applies hereinafter)).

The hard monomer contains a nitrile-group-containing unsaturated ethylenic monomer as an essential component. In other words, the monomer composition contains a nitrile-group-containing unsaturated ethylenic monomer as an essential component.

Examples of the nitrile-group-containing unsaturated ethylenic monomer include a nitrile-group-containing vinyl monomer. Examples of the nitrile-group-containing vinyl monomer include (meth)acrylonitrile. The (meth)acrylonitrile is acrylonitrile and/or methacrylonitrile. These can be used alone or in a combination of two or more. As the nitrile-group-containing unsaturated ethylenic monomer, in terms of the mineral oil resistance, the nitrile-group-containing vinyl monomer is preferably used, (meth)acrylonitrile is more preferably used, and acrylonitrile is even more preferably used.

The content ratio of the nitrile-group-containing unsaturated ethylenic monomer to the total amount of the monomer composition is 21% by mass or more, preferably 24% by mass or more. When the content ratio of the nitrile-group-containing unsaturated ethylenic monomer is the above-described lower limit or more, more excellent mineral oil resistance can be achieved.

Further, the content ratio of the nitrile-group-containing unsaturated ethylenic monomer to the total amount of the monomer composition is 70% by mass or less, preferably 65% by mass or less, more preferably 60% by mass or less. When the content ratio of the nitrile-group-containing unsaturated ethylenic monomer is the above-described upper limit or less, more excellent mineral oil resistance can be achieved.

In particular, in terms of the mineral oil resistance of the coated surface in an unbent state, the content ratio of the nitrile-group-containing unsaturated ethylenic monomer is even more preferably 35% by mass or more, particularly preferably 40% by mass or more. Further, the content ratio of the nitrile-group-containing unsaturated ethylenic monomer is preferably 60% by mass or less.

On the other hand, in terms of the blocking resistance and bending resistance of the coated surface (the crack resistance while the coated surface is being bent and the mineral oil resistance after the coated surface is bent), the content ratio of the nitrile-group-containing unsaturated ethylenic monomer is even more preferably 34% by mass or less, even more preferably 30% by mass or less, particularly preferably 28% by mass or less. Further, the content ratio of the nitrile-group-containing unsaturated ethylenic monomer is preferably 24% by mass or more.

Furthermore, the content ratio of the nitrile-group-containing unsaturated ethylenic monomer to the total amount of the hard monomer is, for example, 60% by mass or more, preferably 70% by mass or more, more preferably 80% by mass or more.

Furthermore, the content ratio of the nitrile-group-containing unsaturated ethylenic monomer to the total amount of the hard monomer is, for example, 100% by mass or less, preferably 95% by mass or less, more preferably 90% by mass or less.

The hard monomer may contain a benzene-ring-containing unsaturated ethylenic monomer as an optional component. In other words, the monomer composition may contain a benzene-ring-containing unsaturated ethylenic monomer as an optional component.

Examples of the benzene-ring-containing unsaturated ethylenic monomer include a styrene vinyl monomer. Examples of the styrene vinyl monomer include styrene, $\alpha$-methylstyrene, p-methylstyrene, vinyl toluene, and chlorostyrene. These can be used alone or in a combination of two or more. As the benzene-ring-containing unsaturated ethylenic monomer, a styrene vinyl monomer is preferably used, and styrene is more preferably used.

When the monomer composition contains a benzene-ring-containing unsaturated ethylenic monomer, the content ratio of the benzene-ring-containing unsaturated ethylenic monomer to the total amount of the monomer composition is, in terms of the polymerizability of the nitrile-group-containing unsaturated ethylenic monomer, for example, 1% by mass or more, preferably 2% by mass or more, more preferably 5% by mass or more.

Further, when the monomer composition contains a benzene-ring-containing unsaturated ethylenic monomer, the content ratio of the benzene-ring-containing unsaturated ethylenic monomer to the total amount of the monomer composition is, in terms of the mineral oil resistance, for example, 50% by mass or less, preferably 30% by mass or less, more preferably 10% by mass or less.

The hard monomer may contain methyl methacrylate as an optional component. In other words, the monomer composition can contain methyl methacrylate as an optional component.

When the monomer composition contains methyl methacrylate, the content ratio of the methyl methacrylate to the total amount of the monomer composition is, in terms of the mineral oil resistance, for example, 1% by mass or more, preferably 2% by mass or more, more preferably 5% by mass or more.

Further, when the monomer composition contains methyl methacrylate, the content ratio of the methyl methacrylate to the total amount of the monomer composition is, in terms of the mineral oil resistance, for example, 50% by mass or less, preferably 30% by mass or less, more preferably 10% by mass or less.

The hard monomer preferably contains a nitrile-group-containing unsaturated ethylenic monomer and methyl methacrylate. The hard monomer more preferably consists of a nitrile-group-containing unsaturated ethylenic monomer and methyl methacrylate. Alternatively, the hard monomer preferably consists of a nitrile-group-containing unsaturated ethylenic monomer, a benzene-ring-containing unsaturated ethylenic monomer, and methyl methacrylate.

The content ratio of the hard monomer to the total amount of the monomer composition is, in terms of the mineral oil resistance, for example, 30% by mass or more, preferably 40% by mass or more, more preferably 50% by mass or more, even more preferably 55% by mass or more.

Further, the content ratio of the hard monomer to the total amount of the monomer composition is, in terms of the film-forming properties, for example, 90% by mass or less, preferably 80% by mass or less, more preferably 70% by mass or less.

Furthermore, the monomer composition can contain a soft monomer as an optional component. The soft monomer is a monomer of which homopolymer has a relatively low glass-transition temperature (for example, less than 20°C, preferably 0°C or less).

Examples of the soft monomer include alkyl (meth)acrylate except for methyl methacrylate. The (meth)acrylate is acrylate and/or methacrylate (the same applies hereinafter).

Examples of the alkyl (meth)acrylate include alkyl (meth)acrylate (except for methyl methacrylate) having an alkyl moiety having 1 to 30 carbon atom(s). More specifically, examples of the alkyl (meth)acrylate include methyl acrylate, ethyl (meth)acrylate, propyl (meth)acrylate, isopropyl (meth)acrylate, butyl (meth)acrylate, isobutyl (meth)acrylate, s-butyl (meth)acrylate, t-butyl (meth)acrylate, pentyl (meth)acrylate, neopentyl (meth)acrylate, isoamyl (meth)acrylate, hexyl (meth)acrylate, heptyl (meth)acrylate, octyl (meth)acrylate, isooctyl (meth)acrylate, 2-ethylhexyl (meth)acrylate, nonyl (meth)acrylate, isononyl (meth)acrylate, decyl (meth)acrylate, dodecyl (meth)acrylate, tridecyl (meth)acrylate, tetradecyl (meth)acrylate, 1-methyltridecyl (meth)acrylate, hexadecyl (meth)acrylate, octadecyl (meth)acrylate, isostearyl (meth)acrylate, eicosyl (meth)acrylate, docosyl (meth)acrylate, tetracosyl (meth)acrylate, triacontyl (meth)acrylate, cyclohexyl (meth)acrylate, and isobornyl (meth)acrylate. These can be used alone or in a combination of two or more.

As the alkyl (meth)acrylate, alkyl (meth)acrylate having an alkyl moiety having 2 to 10 carbon atoms is preferably used, butyl (meth)acrylate and 2-ethylhexyl (meth)acrylate are more preferably used, and butyl acrylate and 2-ethylhexyl acrylate are even more preferably used.

When the monomer composition contains a soft monomer, the content ratio of the soft monomer to the total amount of the monomer composition is, in terms of the film-forming properties, for example, 1% by mass or more, preferably 10% by mass or more, more preferably 20% by mass or more. That is to say, in terms of the mineral oil resistance, the monomer composition preferably contains a soft monomer.

Further, when the monomer composition contains a soft monomer, the content ratio of the soft monomer to the total amount of the monomer composition is, in terms of the mineral oil resistance, for example, 60% by mass or less, preferably 55% by mass or less, more preferably 50% by mass or less.

Furthermore, the monomer composition contains a copolymerizable monomer. The copolymerizable monomer is a monomer compolymerizable with the hard monomer and/or the soft monomer. Examples of the copolymerizable monomer include a copolymerizable essential monomer and a copolymerizable optional monomer.

The copolymerizable essential monomer is contained in the monomer composition as an essential component. Examples of the copolymerizable essential monomer include a carboxy-group-containing unsaturated ethylenic monomer. In other words, the monomer composition contains a carboxy-group-containing unsaturated ethylenic monomer as an essential component.

Examples of the carboxy-group-containing unsaturated ethylenic monomer include a carboxy-group-containing vinyl monomer. Examples of the carboxy-group-containing vinyl monomer include $\alpha$, $\beta$-unsaturated carboxylic acid and its salt. Examples of the $\alpha$, $\beta$-unsaturated carboxylic acid include $\alpha$, $\beta$-unsaturated monocarboxylic acid and $\alpha$, $\beta$-unsaturated dicarboxylic acid. Examples of the $\alpha$, $\beta$-unsaturated monocarboxylic acid include (meth)acrylic acid and crotonic acid. Examples of the $\alpha$, $\beta$-unsaturated dicarboxylic acid include itaconic acid, maleic acid, fumaric acid, itaconic acid anhydride, maleic acid anhydride, and fumaric acid anhydride. Examples of the salt include sodium salt, potassium salt, and ammonium salt. These can be used alone or in a combination of two or more. As the carboxy-group-containing unsaturated ethylenic monomer, in terms of the mineral oil resistance, a carboxy-group-containing vinyl monomer is preferably used, $\alpha$, $\beta$-unsaturated monocarboxylic acid is more preferably used, (meth)acrylic acid is even more preferably used, and methacrylic acid is particularly preferably used.

The content ratio of the carboxy-group-containing unsaturated ethylenic monomer to the total amount of the monomer composition is, in terms of the mineral oil resistance, 3% by mass or more, preferably 4% by mass or more, more preferably 5% by mass or more. When the content ratio of the carboxy-group-containing unsaturated ethylenic monomer is the above-described lower limit or more, more excellent film-forming properties and mineral oil resistance can be achieved.

Further, the content ratio of the carboxy-group-containing unsaturated ethylenic monomer to the total amount of the monomer composition is, in terms of the mineral oil resistance, 10% by mass or less, preferably 8% by mass or less. When the content ratio of the carboxy-group-containing unsaturated ethylenic monomer is the above-described upper limit or less, more excellent film-forming properties and mineral oil resistance can be achieved.

The copolymerizable optional monomer is a copolymerizable monomer that is contained in the monomer composition as necessary. Examples of the copolymerizable optional monomer include another functional group-containing copolymerizable monomer.

The other functional group-containing copolymerizable monomer is a functional group-containing copolymerizable monomer except for the carboxy-group-containing unsaturated ethylenic monomer. Examples of the other functional group-containing copolymerizable monomer include a hydroxyl-group-containing vinyl monomer, an amide group-containing vinyl monomer, a glycidyl group-containing vinyl monomer, an amino group-containing vinyl monomer, an aceto acetoxy group-containing vinyl monomer, a phosphate group-containing vinyl monomer, and a sulfonate group-containing vinyl monomer.

Examples of the hydroxyl-group-containing vinyl monomer include hydroxy methyl (meth)acrylate, 2-hydroxy ethyl (meth)acrylate, and 3-hydroxy propyl (meth)acrylate. Examples of the amide group-containing vinyl monomer include (meth)acrylamide and methylenebis (meth)acrylamide. Examples of the glycidyl group-containing vinyl monomer include glycidyl (meth)acrylate. Examples of the amino group-containing vinyl monomer include 2-aminoethyl (meth)acrylate, 2-(N-methylamino)ethyl (meth)acrylate, and 2-(N, N-dimethylamino)ethyl (meth)acrylate. Examples of the aceto acetoxy group-containing vinyl monomer include aceto acetoxyethyl (meth)acrylate. Examples of the phosphate group-containing vinyl monomer include 2-(meth)acryloxy ethyl acid phosphate. Examples of the sulfonate group-containing vinyl monomer include allyl sulfonic acid, metallylsulfonic acid, acrylamide t-butylsulfonic acid, and styrenesulfonic acid salt. Further, examples of the salt include sodium salt, potassium salt, and ammonium salt.

The other functional group-containing copolymerizable monomers can be used alone or in a combination of two or more.

As the other functional group-containing copolymerizable monomer, a hydroxyl-group-containing vinyl monomer, an amide group-containing vinyl monomer, and N-substituted unsaturated carboxylic acid amides are preferably used.

Examples of the copolymerizable optional monomer further include vinyl esters, N-substituted unsaturated carboxylic acid amides, a complex ring type vinyl compound, a halogenated vinylidene compound, $\alpha$-olefines, dienes, and a cross-linkable vinyl monomer.

Examples of the vinyl esters include vinyl acetate and vinyl propionate. Examples of the N-substituted unsaturated carboxylic acid amides include N-methylol (meth)acrylamide. Examples of the complex ring type vinyl compound include vinylpyrrolidone. Examples of the halogenated vinylidene compound include vinylidene chloride and vinylidene fluoride. Examples of the $\alpha$-olefines include ethylene and propylene. Examples of the dienes include butadiene. Examples of the cross-linkable vinyl monomer include methylenebis (meth)acrylamide, divinylbenzen, polyethyleneglycol chain-containing di(meth)acrylate, trimethylol propanetetracrylate, pentaerythritol triacrylate, and pentaerythritol tetraacrylate. These can be used alone or in a combination of two or more.

The content ratio of the copolymerizable optional monomer is appropriately set depending on the purpose and use.

For example, when the monomer composition contains a hydroxyl-group-containing vinyl monomer, the content ratio of the hydroxyl-group-containing vinyl monomer to the total amount of the monomer composition is, in terms of the mineral oil resistance, for example, 0.5% by mass or more, preferably 1% by mass or more, more preferably 5% by mass or more.

Further, for example, when the monomer composition contains a hydroxyl-group-containing vinyl monomer, the content ratio of the hydroxyl-group-containing vinyl monomer is, in terms of the mineral oil resistance, for example, 30% by mass or less, preferably 20% by mass or less, more preferably 10% by mass or less.

Alternatively, for example, when the monomer composition contains an amide group-containing vinyl monomer, the content ratio of the amide group-containing vinyl monomer to the total amount of the monomer composition is, in terms of the mineral oil resistance, for example, 0.5% by mass or more, preferably 10% by mass or more, more preferably 20% by mass or more.

Further, for example, when the monomer composition contains an amide group-containing vinyl monomer, the content ratio of the amide group-containing vinyl monomer is, in terms of the mineral oil resistance, for example, 50% by mass or less, preferably 40% by mass or less, more preferably 30% by mass or less.

Alternatively, for example, when the monomer composition contains N-substituted unsaturated carboxylic acid amides, the content ratio of the N-substituted unsaturated carboxylic acid amides to the total amount of the monomer composition is, in terms of the mineral oil resistance, for example, 0% by mass or more, preferably 0.5% by mass or more, more preferably 1.0% by mass or more.

Further, for example, when the monomer composition contains N-substituted unsaturated carboxylic acid amides, the content ratio of the N-substituted unsaturated carboxylic acid amides is, in terms of the mineral oil resistance, for example, 20% by mass or less, preferably 10% by mass or less, more preferably 5% by mass or less.

Preferably, the copolymerizable monomer contains a copolymerizable essential monomer but does not contain a copolymerizable optional monomer. That is to say, the monomer composition preferably contains a hard monomer, a soft monomer, and a copolymerizable essential monomer. The monomer composition more preferably consists of a hard monomer, a soft monomer, and a copolymerizable essential monomer.

The copolymer of the monomer composition is obtained by polymerizing the above-described monomer composition using a known method. More specifically, for example, the monomer composition and a polymerization initiator are blended in an aqueous solvent to polymerize the monomer composition.

The polymerization initiator is not especially limited, and examples thereof include a water-soluble initiator and an oil-soluble initiator. Examples of the water-soluble initiator include potassium persulfate, sodium persulfate, ammonium persulfate, hydrogen peroxide, and organic hydroperoxide. Examples of the oil-soluble initiator include benzoyl peroxide and azobisisobutyronitrile. Examples of the polymerization initiator also include a known redox initiator. These can be used alone or in a combination of two or more. As the polymerization initiator, a water-soluble initiator is preferably used, and ammonium persulfate is more preferably used.

The blending ratio of the polymerization initiator to 100 parts by mass of the monomer composition is, for example, 0.01 parts by mass or more, preferably 0.1 parts by mass or more, more preferably 0.2 parts by mass or more, even more preferably 0.25 parts by mass or more. Further, the blending ratio of the polymerization initiator to 100 parts by mass of the monomer composition is, for example, 3 parts by mass or less, preferably 2 parts by mass or less.

Examples of the aqueous solvent include water and a hydrophilic solvent. Examples of the hydrophilic solvent include alcohol, ketone, ester, ether, ether alcohol, ether alcohol acetate, and nitrile. Examples of the alcohol include methanol and ethanol. Examples of the ketone include acetone. Examples of the ester include ethyl acetate and butyl acetate. Examples of the ether include dioxane and tetrahydrofuran. Examples of the ether alcohol include cellosolve and carbitol. Examples of the ether alcohol acetate include cellosolve acetate and carbitol acetate. Examples of the nitrile include acetonitrile. These can be used alone or in a combination of two or more. As the aqueous solvent, water is preferably used.

When water is used as the aqueous solvent, an emulsifier is preferably blended together with the monomer composition to carry out the emulsion polymerization of the monomer composition in the water.

Examples of the emulsifier include an anionic surfactant and a non-ionic surfactant. Examples of the anionic surfactant include an alkyl sulfuric acid ester salt, an aliphatic sulfonic acid salt, an alkyl benzene sulfonic acid salt, and an alkyl diphenyl ether sulfonic acid salt. Examples of the non-ionic surfactant include an alkyl ester of polyethylene glycol, an alkyl phenyl ether of polyethylene glycol, and an alkyl ether of polyethylene glycol. These can be used alone or in a combination of two or more.

The blending ratio of the emulsifier is appropriately set depending on the purpose and use. More specifically, the blending ratio of the emulsifier to 100 parts by mass of the monomer composition is, for example, 0.1 parts by mass or more, preferably 0.3 parts by mass or more. Further, the blending ratio of the emulsifier to 100 parts by mass of the monomer composition is, for example, 2.0 parts by mass or less, preferably 1.8 parts by mass or less.

The conditions for the polymerization are appropriately set depending on the purpose and use. For example, the pressure condition is under a normal pressure. Further, the polymerization temperature is, for example, 30°C or more, preferably 50°C or more. Furthermore, the polymerization temperature is, for example, 95°C or less, preferably 85°C or less. Furthermore, the polymerization time is, for example, 0.5 hours or more, preferably 1.5 hours or more. Furthermore, the polymerization time is, for example, 20 hours or less, preferably 10 hours or less.

Furthermore, in the polymerization, in terms of improving the production stability, a known additive can be blended in an appropriate ratio. Examples of the additive include a pH adjuster, a sequestrant, a molecular weight regulator, and a chain transfer agent. The additive may be added to the monomer composition before the polymerization, or to the reaction solution during the polymerization, or the reacted solution after the polymerization.

In this manner, the monomer composition copolymerizes in the aqueous solvent, thereby generating a copolymer of the monomer composition. As a result, a mineral-oil-resistance-imparting coating material containing the aqueous solvent and the copolymer dissolved and/or dispersed in the aqueous solvent is obtained. More specifically, when water is used as the aqueous solvent, a mineral-oil-resistance-imparting coating material is obtained as a resin emulsion in which the above-described copolymer is dispersed in the water.

Further, in the above-described polymerization, preferably, a neutralizer is blended in the reacted solution to adjust the pH. Examples of the neutralizer include ammonia. The neutralizer is preferably added to the reacted solution after the polymerization. Further, as necessary, the reacted solution is maintained for a predetermine period of time. After the blending of the neutralizer, the pH of the reacted solution is, for example, 5 or more, preferably 7 or more, more preferably 8 or more. Further, the pH of the reaction solution is, for example, 11 or less, more preferably 10 or less. The neutralizer hydrates the copolymer in the reacted solution, thereby subjecting the copolymer to a swelling and softening treatment.

In the above-described polymerization, the monomer composition may be polymerized collectively or polymerized in multiple stages. For example, a multistage polymerization of the monomer composition can form core-shell particles.

More specifically, first, a part of the monomer composition (primary composition) is polymerized to synthesize a primary polymerization product. Thereafter, the residue (secondary composition) with respect to the part of the monomer composition is polymerized under the present of the primary polymerization product to synthesize a secondary polymerization product (multistage polymerization). This multistage polymerization produces core-shell particles of the copolymer each including a core made of the primary polymerization product and a shell made of the secondary polymerization product covering the primary polymerization product. The order of the reactions of the part of the monomer composition and the residue may be opposite to the above-described order.

The part of the monomer composition (primary composition) preferably contains the nitrile-group-containing unsaturated ethylenic monomer, carboxy-group-containing unsaturated ethylenic monomer, and soft monomer. Further, the residue (secondary composition) with respect to the part of the monomer composition preferably contains the functional group-containing copolymerizable monomer.

The above-described copolymer contains the repeating units derived from the nitrile-group-containing unsaturated ethylenic monomer and the repeating units derived from the carboxy-group-containing unsaturated ethylenic monomer.

The content ratio of the repeating units derived from the nitrile-group-containing unsaturated ethylenic monomer in the above-described copolymer is the same as that of the nitrile-group-containing unsaturated ethylenic monomer in the monomer composition.

That is to say, the content ratio of the repeating units derived from the nitrile-group-containing unsaturated ethylenic monomer to the total amount of the copolymer is 21% by mass or more, preferably 24% by mass or more. Further, the content ratio of the repeating units derived from the nitrile-group-containing unsaturated ethylenic monomer to the total amount of the copolymer is 70% by mass or less, preferably 65% by mass or less, more preferably 60% by mass or less. When the content ratio of the repeating units derived from the nitrile-group-containing unsaturated ethylenic monomer is in the above-described range, a more excellent mineral oil resistance can be obtained.

In particular, in terms of the mineral oil resistance of the coated surface in an unbent state, the content ratio of the repeating units derived from the nitrile-group-containing unsaturated ethylenic monomer to the total amount of the copolymer is, even more preferably 35% by mass or more, particularly preferably 40% by mass or more. Further, the content ratio of the repeating units derived from the nitrile-group-containing unsaturated ethylenic monomer to the total amount of the copolymer is, preferably 60% by mass or less.

On the other hand, in terms of the blocking resistance of the coated surface and the bending resistance (the crack resistance of the coated surface while the coated surface is being bent and the mineral oil resistance after the coated surface is bent), the content ratio of the repeating units derived from the nitrile-group-containing unsaturated ethylenic monomer to the total amount of the copolymer is even more preferably 34% by mass or less, even more preferably 30% by mass or less, particularly preferably 28% by mass or less. Further, the content ratio of the repeating units derived from the nitrile-group-containing unsaturated ethylenic monomer to the total amount of the copolymer is preferably 24% by mass or more.

Further, the content ratio of the repeating units derived from the carboxy-group-containing unsaturated ethylenic monomer in the copolymer is the same as that of the content ratio of the carboxy-group-containing unsaturated ethylenic monomer in the monomer composition.

That is to say, the content ratio of the repeating units derived from the carboxy-group-containing unsaturated ethylenic monomer to the total amount of the copolymer is 3% by mass or more, preferably 4% by mass or more, more preferably 5% by mass or more. Further, the content ratio of the repeating units derived from the carboxy-group-containing unsaturated ethylenic monomer to the total amount of the copolymer is 10% by mass or less, preferably 8% by mass or less. When the content ratio of the repeating units derived from the carboxy-group-containing unsaturated ethylenic monomer is in the above-described range, more excellent mineral oil resistance can be achieved.

The copolymer has a weight-average molecular weight of, for example, 5000 or more, preferably 10000 or more, more preferably 30000 or more. Further, the weight-average molecular weight of the copolymer is, for example, 1000000 or less, preferably 800000 or less, more preferably 500000 or less. The weight-average molecular weight is a molecular weight in terms of standard polystyrene by gel permeation chromatography.

Furthermore, in terms of the mineral oil resistance and the blocking resistance of the coated surface, the copolymer has a glass-transition temperature of, for example, -50°C or more, preferably -30°C or more. Furthermore, in terms of the mineral oil resistance and the film-forming properties, the glass-transition temperature of the copolymer is, for example, 200°C or less, preferably 100°C or less, more preferably 80°C or less. The glass-transition temperature of is calculated using the FOX equation (the same applies hereinafter).

In particular, in terms of the mineral oil resistance of the coated surface in an unbent state, the glass-transition temperature of the copolymer is even more preferably -10°C or more, even more preferably 0°C or more, even more preferably 10°C or more, particularly preferably 20°C or more. Furthermore, the glass-transition temperature of the copolymer is preferably 80°C or less.

On the other hand, in terms of the blocking resistance of the coated surface and the bending resistance (the crack resistance of the coated surface while the coated surface is being bent and the mineral oil resistance after the coated surface is bent), the glass-transition temperature of the copolymer is even more preferably 20°C or less, even more preferably 10°C or less, even more preferably 0°C or less, particularly preferably -10°C or less. Further, the glass-transition temperature of the copolymer is preferably -30°C or more.

In the mineral-oil-resistance-imparting coating material, the solid content concentration of the copolymer is, for example, 3% by mass or more, preferably 5% by mass or more, more preferably 10% by mass or more. Further, in the mineral-oil-resistance-imparting coating material, the solid content concentration of the copolymer is, for example, 50% by mass or less, preferably 30% by mass or less.

In the mineral-oil-resistance-imparting coating material, as necessary, the solid content concentration of the copolymer is appropriately adjusted by adding or removing the aqueous solvent.

Further, as necessary, the mineral-oil-resistance-imparting coating material can contain an additive in an appropriate ratio. Examples of the additive include a cross-linking agent, an inorganic pigment, an organic pigment, a filler, an antioxidant, a ultraviolet absorber, a thermoplastic resin, a thermosetting resin, a lubricant, a thickener, a moisturizer, an antifoaming agent, and a pH adjuster. These can be used alone or in a combination of two or more. As the additive, a cross-linking agent and an inorganic pigment is preferably used.

Examples of the cross-linking agent include an isocyanate-based cross-linking agent, a carbodiimide-based cross-linking agent, an epoxy-based cross-linking agent, a melamine-based cross-linking agent, and an oxazoline-based cross-linking agent. These can be used alone or in a combination of two or more. As the cross-linking agent, an isocyanate-based cross-linking agent and a carbodiimide-based cross-linking agent are preferably used.

The blending ratio of the cross-linking agent is not especially limited, and appropriately set depending on the purpose and use. More specifically, the blending ratio of the cross-linking agent, for example, to 100 parts by mass of the total amount of the copolymer is, for example, 1 part by mass or more, preferably 3 parts by mass or more. Further, the blending ratio of the cross-linking agent, for example, to 100 parts by mass of the total amount of the copolymer is, for example, 30 parts by mass or less, preferably 20 parts by mass or less.

When the mineral-oil-resistance-imparting coating material contains a cross-linking agent, more excellent mineral oil resistance and film-forming properties can be achieved.

Examples of the inorganic pigment include calcium carbonate, talc, colloidal silica, clay, calcined kaolin, titanium oxide, zinc oxide, aluminum hydroxide, and clay mineral. Examples of the clay mineral include montmorillonite, saponite, hectorite, vermiculite, kaolinite, natural mica, and synthetic mica. These can be used alone or in a combination of two or more. The blending ratio of the inorganic pigment is not especially limited, and appropriately set depending on the purpose and use.

When the mineral-oil-resistance-imparting coating material contains an inorganic pigment, more excellent mineral oil resistance can be achieved. Further, when the mineral-oil-resistance-imparting coating material contains an inorganic pigment, the gloss of the coated surface can be controlled, and the heat resistance, water resistance, and gas barrier properties of the coated surface can be improved.

Further, the above-described mineral-oil-resistance-imparting coating material contains a copolymer of the monomer composition containing a nitrile-group-containing unsaturated ethylenic monomer and a carboxy-group-containing unsaturated ethylenic monomer in a predetermined ratio. Hence, the above-described mineral-oil-resistance-imparting coating material is capable of forming a coating layer having an excellent mineral oil resistance. Furthermore, in the above-described mineral-oil-resistance-imparting coating material, the aqueous solvent is used. Thus, the environmental burden can be reduced as compared with when an organic solvent is used. In addition, the coating layer formed of the above-described mineral-oil-resistance-imparting coating material has excellent adhesive properties to a substrate containing mineral oil.

That is to say, the above-described mineral-oil-resistance-imparting coating material is capable of forming a mineral-oil-resistant layer having excellent adhesive properties as a coating layer while reducing the environmental burden. Thus, the above-described mineral-oil-resistance-imparting coating material is preferably applied to a substrate containing mineral oil.

Examples of the mineral oil include petroleum-derived saturated hydrocarbons and petroleum-derived aromatic hydrocarbons. More specifically, examples of the mineral oil include a hydrocarbon compound having 6 to 30 carbon atoms, liquid paraffin, solid paraffin, wax, and Vaseline.

Examples of the substrate containing mineral oil include a substrate containing a printing ink. More specifically, examples thereof include recycled paper.

The thickness of the substrate containing mineral oil is not especially limited, and appropriately set depending on the purpose and use. For example, the thickness of the substrate containing mineral oil is, for example, 1 μm or more, preferably 3 μm or more. Further, the thickness of the substrate containing mineral oil is, for example, 1000 μm

or less, preferably 800 μm or less.

Then, the above-described mineral-oil-resistance-imparting coating material is, for example, applied to a surface of one side of the substrate containing mineral oil, and, as necessary, dried by heating.

The method of applying the mineral-oil-resistance-imparting coating material is not especially limited, and a known application method is employed. Examples of the application method include a gravure coater method, a small diameter gravure coater method, a reverse roll coater method, a transfer roll coater method, a kiss coater method, a dip coater method, a micro gravure coat method, a knife coater method, an air doctor coater method, a blade coater method, a rod coater method, a squeeze coater method, a cast coater method, a die coater method, a screen printing method, and a spray coating method.

Further, the conditions for drying is not especially limited, and appropriately set depending on the purpose and use. For example, the drying temperature is, for example, 40°C or more. Furthermore, the drying temperature is, for example, 200°C or less. The drying time is appropriately set depending on the purpose and use.

In this manner, a coating layer of the mineral-oil-resistance-imparting coating material is formed on the surface of one side of the substrate containing mineral oil.

The thickness of the coating layer (after dried) is not especially limited, and appropriately set depending on the purpose and use. For example, the thickness of the coating layer (after dried) is, for example, 1 μm or more, preferably 3 μm or more. Further, the thickness of the coating layer (after dried) is, for example, 10 μm or less, preferably 8 μm or less.

As described above, a laminate including the substrate containing mineral oil and the coating layer of the above-described mineral-oil-resistance-imparting coating material disposed on the surface of the substrate is produced.

In particular, when recycled paper is selected as the substrate containing mineral oil, a laminate including the recycled paper and the coating layer of the above-described mineral-oil-resistance-imparting coating material disposed on the surface of one side of the recycled paper is produced.

The thickness of the laminate is not especially limited, and appropriately set depending on the purpose and use. For example, the thickness (total thickness) of the laminate is, for example, 1 μm or more, preferably 3 μm or more. Further, the thickness (total thickness) of the laminate is, for example, 1000 μm or less, preferably 800 μm or less.

Further, the above-described laminate includes the coating layer of the above-described mineral-oil-resistance-imparting coating material. Thus, the above-described laminate has an excellent mineral oil resistance. As a result, the above-described laminate is suitably used as a packaging material.

More specifically, when a substrate (preferably, recycled paper) without the above-described coating layer is used as a packaging material, the mineral oil seeps out of the surface of the packaging material, and the mineral oil contained in the substrate may adhere and impregnate to the packaged object in the contact part in which the packaging material is in contact with the packaged object.

In light thereof, in the above-described laminate, the coating layer of the above-described mineral-oil-resistance-imparting coating material is formed on at least one side of the substrate containing mineral oil (preferably, recycled paper).

Thus, when the packaging material is in contact with the packaged object, the coating layer of the above-described mineral-oil-resistance-imparting coating material suppresses the adhesion and impregnation of the mineral oil to the packaged object.

In the above description, the coating layer of the mineral-oil-resistance-imparting coating material is disposed on the surface of one side of the recycled paper. However, the coating layer of the above-described mineral-oil-resistance-imparting coating material may be disposed on the surfaces of both sides of the recycled paper.

Further, in the above description, the coating layer of the mineral-oil-resistance-imparting coating material is disposed on the surface of one side or the surfaces of both sides of the recycled paper. However, for example, an arbitrary intermediate layer (undercoat layer) may intervene between the recycled paper and the coating layer. Furthermore, as necessary, a known top coating layer (overcoat layer) may be laminated on the coating layer of the above-described mineral-oil-resistance-imparting coating material. Also in such a case, the coating layer of the above-described mineral-oil-resistance-imparting coating material suppresses the adhesion and impregnation of the mineral oil to the packaged object.

As described above, the mineral-oil-resistance-imparting coating material and the laminate are suitably used, for example, in the field of packaging materials.

Further, the above-described mineral-oil-resistance-imparting coating material can also be used, for example, as an alternative material of a fluorine coating material. In such a case, the mineral-oil-resistance-imparting coating material is suitably used in various fields where conventional fluorine coating materials are used.

Examples

The specific numeral values used in the description below, such as mixing ratios (content ratios), physical property values, and parameters, can be replaced with the corresponding mixing ratios (content ratios), physical property values, and parameters in the above-described "DESCRIPTION OF THE EMBODIMENTS", including the upper limit values (numeral values defined with "or less", and "less than") or the lower limit values (numeral values defined with "or more", and "more than"). The "parts" and "%" are based on mass unless otherwise specified.

1. Preparation of Mineral-oil-resistance-imparting Coating Material

Example 1

A separable flask equipped with a stirrer and a reflux condenser was charged with 230 g of ion-exchanged water and 1.5 g of sodium dodecyl diphenyl ether disulfonic acid, and the inside of the flask was substituted with a nitrogen gas. Next, the temperature in the flask was increased to 75°C. Next, 0.5 g of potassium persulfate was added to the flask and dissolved. Next, an emulsion of the monomer composition was continuously added to the flask for approximately 5 hours. The emulsion of the monomer composition contained 56 g of acrylonitrile, 5 g of styrene, 5 g of methyl methacrylate, 26 g of n-butyl acrylate, 8 g of methacrylic acid, 0.1 g of n-dodecylmercaptan, 0.2 g of sodium dodecyl diphenyl ether disulfonic acid, and 56 g of ion-exchanged water.

Next, the above-described temperature was maintained for 4 hours to complete the polymerization. Thereafter, aqueous ammonia was added to the flask to alkalify the contents of the flask, and the temperature was maintained for 2 hours. In this manner, the copolymer was hydrated and subjected to a swelling and softening treatment. Thereafter, the flask was cooled to room temperature, and deionized water was added to the flask. In this manner, a mineral-oil-resistance-imparting coating material was produced as a resin emulsion of the copolymer having a solid content concentration of approximately 20% by mass.

Further, the glass-transition temperature (Tg) of the copolymer was calculated using the Fox equation below (the same applies hereinafter). The glass-transition temperature (Tg) of the copolymer was shown in Table 1 (the same applies hereinafter).

$$1/Tg = W_1/Tg_1 + W_2/Tg_2 + \ldots + W_n/Tg_n \quad (1)$$

[In the equation, Tg represents the glass-transition temperature of the copolymer (unit: K), $Tg_i$ (i = 1, 2, ... n) represents the glass-transition temperature (unit: K) when a monomer i forms a homopolymer, and $W_i$ (i = 1, 2, ... n) represents the mass fraction of the monomer i in the whole of the monomer.

Example 2

A separable flask equipped with a stirrer and a reflux condenser was charged with 230 g of ion-exchanged water and 1.5 g of sodium dodecyl sulfate, and the inside of the flask was substituted with a nitrogen gas. Next, the temperature in the flask was increased to 75°C. Next, 1.0 g of potassium persulfate was added to the flask and dissolved. Next, an emulsion of the monomer composition was continuously added to the flask for approximately 5 hours. The emulsion of the monomer composition contained 45 g of acrylonitrile, 10 g of methyl methacrylate, 40 g of n-butyl acrylate, 5 g of methacrylic acid, 0.2 g of sodium dodecyl sulfate, and 56 g of ion-exchanged water.

Next, the above-described temperature was maintained for 2 hours, and thereafter 0.2 g of ammonium persulfate was added thereto, and the above-described temperature was maintained for 2 hours to complete the polymerization. Thereafter, aqueous ammonia was added to the flask to alkalify the contents of the flask, and the temperature was maintained for 3 hours. In this manner, the copolymer was hydrated and subjected to a swelling and softening treatment. Thereafter, the flask was cooled to room temperature, and deionized water was added to the flask. In this manner, a mineral-oil-resistance-imparting coating material was produced as a resin emulsion of the copolymer having a solid content concentration of approximately 20% by mass.

Example 3

A separable flask equipped with a stirrer and a reflux condenser was charged with 230 g of ion-exchanged water and 1.5 g of sodium dodecyl sulfate, and the inside of the flask was substituted with a nitrogen gas. Next, the temperature in the flask was increased to 75°C. Next, 1.0 g of potassium persulfate was added to the flask and dissolved. Next, an emulsion of the monomer composition was continuously added to the flask for approximately 5 hours. The emulsion of the monomer composition contained 45 g of acrylonitrile, 10 g of methyl methacrylate, 40 g of n-butyl acrylate, 5 g of acrylic acid, 0.2 g of sodium dodecyl sulfate, and 56 g of ion-exchanged water.

Next, the above-described temperature was maintained for 2 hours, and thereafter 0.2 g of ammonium persulfate was added thereto, and the above-described temperature was maintained for 2 hours to complete the polymerization. Thereafter, aqueous ammonia was added to the flask to alkalify the contents of the flask, and the temperature was maintained for 3 hours. In this manner, the copolymer was hydrated and subjected to a swelling and softening treatment. Thereafter, the flask was cooled to room temperature, and deionized water was added to the flask. In this manner, a mineral-oil-resistance-imparting coating material was produced as a resin emulsion of the copolymer having a solid content concentration of approximately 20% by mass.

Example 4

A separable flask equipped with a stirrer and a reflux condenser was charged with 230 g of ion-exchanged water and 1.5 g of sodium dodecyl sulfate, and the inside of the flask was substituted with a nitrogen gas. Next, the temperature in the flask was increased to 75°C. Next, 1.0 g of potassium persulfate was added to the flask and dissolved. Next, an emulsion of the monomer composition was continuously added to the flask for approximately 5 hours. The emulsion of the monomer composition contained 24 g of acrylonitrile, 71 g of n-butyl acrylate, 5 g of acrylic acid, 0.2 g of sodium dodecyl sulfate, and 56 g of ion-exchanged water.

Next, the above-described temperature was maintained for 2 hours, and thereafter 0.2 g of ammonium persulfate was added thereto, and the above-described temperature was maintained for 2 hours to complete the polymerization. Thereafter, aqueous ammonia was added to the flask to alkalify the contents of the flask, and the temperature was maintained for 3 hours. In this manner, the copolymer was hydrated and subjected to a swelling and softening treatment. Thereafter, the flask was cooled to room temperature, and deionized water was added to the flask. In this manner, a mineral-oil-resistance-imparting coating material was produced as a resin emulsion of the copolymer having a solid content concentration of approximately 20% by mass.

Comparative Example 1

A separable flask equipped with a stirrer and a reflux condenser was charged with 170 g of ion-exchanged water and 1.0 g of sodium dodecyl diphenyl ether disulfonic acid, and the inside of the flask was substituted with a nitrogen gas. Next, the temperature in the flask was increased to 80°C. Next, 0.3 g of sodium persulfate was added to the flask and dissolved. Next, an emulsion of the monomer composition was continuously added to the flask for approximately 4 hours. The emulsion of the monomer composition contained 44 g of methyl methacrylate, 55 g of ethyl acrylate, 1 g of acrylic acid, 1.0 g of sodium dodecyl diphenyl ether disulfonic acid, and 40 g of ion-exchanged water.

Next, the above-described temperature was maintained for 4 hours to complete the polymerization. Thereafter, ion-exchanged water and aqueous ammonium were added to the flask. In this manner, a resin emulsion of the copolymer having a solid content concentration of approximately 30% by mass was produced.

Comparative Example 2

A separable flask equipped with a stirrer and a reflux condenser was charged with 170 g of ion-exchanged water and 1.0 g of sodium dodecyl diphenyl ether disulfonic acid, and the inside of the flask was substituted with a nitrogen gas. Next, the temperature in the flask was increased to 80°C. Next, 0.3 g of sodium persulfate was added to the flask and dissolved. Next, an emulsion of the monomer composition was continuously added to the flask for approximately 4 hours. The emulsion of the monomer composition contained 20 g of acrylonitrile, 24 g of methyl methacrylate, 55 g of ethyl acrylate, 1 g of acrylic acid, 1.0 g of sodium dodecyl diphenyl ether disulfonic acid, and 40 g of ion-exchanged water.

Next, the above-described temperature was maintained for 4 hours to complete the polymerization. Thereafter, ion-exchanged water and aqueous ammonium were added to the flask. In this manner, a resin emulsion of the copolymer having a solid content concentration of approximately 30% by mass was produced.

Comparative Example 3

A separable flask equipped with a stirrer and a reflux condenser was charged with 57 g of ion-exchanged water and 0.3 g of sodium dodecyl diphenyl ether disulfonic acid, and the inside of the flask was substituted with a nitrogen gas. Next, the temperature in the flask was increased to 72°C. Next, 0.3 g of potassium persulfate was added to the flask and dissolved. Next, an emulsion of the monomer composition was continuously added to the flask for approximately 4 hours. The emulsion of the monomer composition contained 51 g of methyl methacrylate, 44 g of 2-ethylhexyl acrylate, 2 g of methacrylic acid, 2 g of 2-hydroxy ethylmethacrylate, 1 g of acrylamide, 0.1 g of t-dodecylmercaptan, 0.3 g of sodium dodecyl diphenyl ether disulfonic acid, and 40 g of ion-exchanged water.

Next, the above-described temperature was maintained for 4 hours to complete the polymerization. Thereafter, ion-exchanged water and aqueous ammonium were added to the flask. In this manner, a resin emulsion of the copolymer having a solid content concentration of approximately 50% by mass was produced.

Comparative Example 4

A separable flask equipped with a stirrer and a reflux condenser was charged with 230 g of ion-exchanged water and 1.5 g of sodium dodecyl sulfate, and the inside of the flask was substituted with a nitrogen gas. Next, the temperature in the flask was increased to 75°C. Next, 1.0 g of potassium persulfate was added to the flask and dissolved. Next, an emulsion of the monomer composition was continuously added to the flask for approximately 5 hours. The emulsion of the monomer composition contained 15 g of acrylonitrile, 80 g of n-butyl acrylate, 5 g of acrylic acid, 0.2 g of sodium dodecyl sulfate, and 56 g of ion-exchanged water.

Next, the above-described temperature was maintained for 2 hours, and thereafter 0.2 g of ammonium persulfate was added thereto, and the above-described temperature was maintained for 2 hours to complete the polymerization. Thereafter, aqueous ammonia was added to the flask to alkalify the contents of the flask, and the temperature was maintained for 3 hours. In this manner, the copolymer was hydrated and subjected to a swelling and softening treatment. Thereafter, the flask was cooled to room temperature, and deionized water was added to the flask. In this manner, a resin emulsion of the copolymer having a solid content concentration of approximately 20% by mass was produced.

Comparative Example 5

A separable flask equipped with a stirrer and a reflux condenser was charged with 230 g of ion-exchanged water and 1.5 g of sodium dodecyl sulfate, and the inside of the flask was substituted with a nitrogen gas. Next, the temperature in the flask was increased to 75°C. Next, 1.0 g of potassium persulfate was added to the flask and dissolved. Next, an emulsion of the monomer composition was continuously added to the flask for approximately 5 hours. The emulsion of the monomer composition contained 22 g of acrylonitrile, 76 g of n-butyl acrylate, 2 g of acrylic acid, 0.2 g of sodium dodecyl sulfate, and 56 g of ion-exchanged water.

Next, the above-described temperature was maintained for 2 hours, and thereafter 0.2 g of ammonium persulfate was added thereto, and the above-described temperature was maintained for 2 hours to complete the polymerization. Thereafter, aqueous ammonia was added to the flask to alkalify the contents of the flask, and the temperature was maintained for 3 hours. In this manner, the copolymer was hydrated and subjected to a swelling and softening treatment. Thereafter, the flask was cooled to room temperature, and deionized water was added to the flask. In this manner, a resin emulsion of the copolymer having a solid content concentration of approximately 20% by mass was produced.

Example 5

A separable flask equipped with a stirrer and a reflux condenser was charged with 80 g of ion-exchanged water and 0.2 g of sodium dodecyl diphenyl ether disulfonic acid, and the inside of the flask was substituted with a nitrogen gas. Next, the temperature in the flask was increased to 75°C. Next, 0.5 g of ammonium persulfate was added to the flask and dissolved. Next, an emulsion of the primary composition in the monomer composition was continuously added to the flask for approximately 6 hours. The emulsion of the primary composition in the monomer composition contained 30 g of acrylonitrile, 30 g of n-butyl acrylate, 2 g of methacrylic acid, 3.3 g of 2-hydroxy ethylmethacrylate, 1.3 g of N-methylolacrylamide, 0.2 g of sodium dodecyl diphenyl ether disulfonic acid, and 40 g of ion-exchanged water.

Next, the above-described temperature was maintained for 5 hours. Thereafter, the flask was cooled to room temperature. Next, aqueous ammonia was added to the flask to adjust the pH to 8.0. Further, the non-volatile content was adjusted to approximately 19% with ion-exchanged water. In this manner, a dispersion of a primary polymer was produced.

Next, the temperature of the dispersion of the primary polymer was increased to 75°C. Next, 0.5 parts of ammonium persulfate were added to the flask. Next, an aqueous solution of the residue of the monomer composition was continuously added to the flask for approximately 2 hours. The aqueous solution of the residue of the monomer composition contained 6.7 of methacrylic acid, 3.3 g of 2-hydroxy ethylmethacrylate, 23.3 g of methacrylamide, 82 g of distilled water, and 8 g of 25% aqueous ammonia.

Next, the above-described temperature was maintained for 2 hours to complete the polymerization. In this manner, core-shell particles of the copolymer each containing a core made of the primary polymerization product and a shell made of a secondary polymerization product covering the primary polymerization product were produced. Further, a mineral-oil-resistance-imparting coating material was produced as a resin emulsion of the copolymer having a solid content concentration of approximately 20% by mass.

2. Laminate

Recycled paper (trade name "OK Prince High-quality Eco G100" manufactured by Oji Paper Co., Ltd.) was prepared as a substrate containing mineral oil. To a surface of one side of the recycled paper, a mineral-oil-resistance-imparting coating material was applied so as to have a dried film thickness of 4 $\mu$m, and dried at 90°C. In this manner, a coating layer (4 $\mu$m) of the mineral-oil-resistance-imparting coating material was formed on the recycled paper. That is to say, a laminate including the recycled paper and the coating layer of the mineral-oil-resistance-imparting coating material was produced.

3. Evaluations

<Sample>

A sample for evaluating the mineral-oil-resistance-imparting coating material was prepared. That is to say, uncoated paper (trade name "Shiratama" manufactured by Oji Paper Co., Ltd.) was prepared. To a surface of one side of the uncoated paper, a mineral-oil-resistance-imparting coating material was applied so as to have a dried film thickness of 4 $\mu$m, and dried at 90°C. In this manner, a laminate including the uncoated paper and the coating layer of the mineral-oil-resistance-imparting coating material was produced as a sample.

<Adhesive Properties>

To the coating layer of the mineral-oil-resistance-imparting coating material of the above-described sample, a pressure-sensitive adhesive tape (trade name cellotape (registered trademark) CT405AP-24, manufactured by Nichiban Co., Ltd.) was bonded, and a 2Kg roller reciprocated thereon once. Thereafter, the pressure-sensitive adhesive tape was released and evaluated by the following criteria.
Good: No release of the coating layer was observed, or a material fracture of the coating layer was observed.
Fair: A part of the coating layer was released from the substrate.
Bad: The whole of the surface of the coating layer was released from the substrate.

<Mineral Oil Resistance>

On the coating layer of the mineral-oil-resistance-imparting coating material of the above-described sample, a drop of mineral oil (hexane or toluene) was put, and a rubbing test (a load of 1 kg, 50 reciprocations) using a rag was carried out. The results were evaluated by the following criteria.
Good: No change in the coating layer was confirmed.
Fair: Roughness of the coating layer was confirmed.
Bad: The coating layer was dissolved.

The higher the evaluation of the coating layer on the rubbing test is, the more the impregnation of the mineral oil to the surface of the laminate is suppressed.

<Bending Resistance and Mineral Oil Resistance of Coated Surface after Being Bent>

The above-described sample was bent inwards in a valley-fold direction once. Thereafter, the mineral oil resistance of the sample was evaluated in the same method and criteria as described above. The results were used as the evaluation of the bending resistance.

<Blocking Resistance>

The blocking resistance of the above-described sample was evaluated using the following method. In other words, two samples (laminates each including the uncoated paper and the coating layer of the mineral-oil-resistance-imparting coating material) were laminated to bring a surface of a coating layer into contact with a surface of an uncoated paper. In this manner, a sample of a laminate was produced. The laminate sample was pressed with a weight of 100 g/cm$^2$. Next, the laminate sample was left to stand in an environment of 40°C and a humidity of 75 RH% for 24 hours. Thereafter, the laminate sample was released. The blocking resistance was evaluated by the following criteria.
Good: The samples were released from each other without resistance.

Bad: The samples adhered to each other and the uncoated paper (the substrate) was broken.

[Table 1]

Table 1

| No. | | | Ex. 1 | Ex. 2 | Ex. 3 | Ex. 4 | Comp. Ex. 1 | Comp. Ex. 2 | Comp Ex. 3 | Comp. Ex. 4 | Comp. Ex. 5 | Ex, 5 Core | Ex, 5 Shell |
|---|---|---|---|---|---|---|---|---|---|---|---|---|---|
| Formulation (g) | Hard monomer | Acrylonitrile | 56 | 45 | 45 | 24 | - | 20 | - | 15 | 22 | 30 | - |
| | | Styrene | 5 | - | - | - | - | - | - | - | - | - | - |
| | | Methyl methacrylate | 5 | 10 | 10 | | 44 | 24 | 51 | | | - | - |
| | Soft monomer | Ethyl acrylate | - | - | - | - | 55 | 55 | - | - | - | - | - |
| | | n-Butyl acrylate | 26 | 40 | 40 | 71 | - | - | - | 80 | 76 | 30 | - |
| | | 2-Ethylhexyl acrylate | - | - | - | - | - | - | 44 | - | - | - | - |
| | Copolymerizable monomer | Methacrylic acid | 8 | 5 | - | - | - | - | 2 | - | - | 2 | 6.7 |
| | | Acrylic acid | - | - | 5 | 5 | 1 | 1 | - | 5 | 2 | - | - |
| | | Hydroxy ethylmethacrylate | - | - | - | - | - | - | 2 | - | - | 3.3 | 3.3 |
| | | Methacrylamide | - | - | - | - | - | - | - | - | - | - | 23.3 |
| | | Acrylamide | - | - | - | - | - | - | 1 | - | - | - | - |
| | | N-methylolacrylamide | - | - | - | - | - | - | - | - | - | 1.3 | - |
| | Total | | 100 | 100 | 100 | 100 | 100 | 100 | 100 | 100 | 100 | 66.6 | 33.3 |
| | Chain transfer agent | n-Dodecylmercaptan | 0.1 | - | - | - | - | - | - | - | - | - | - |
| | | t-Dodecylmercaptan | - | - | - | - | - | - | 0.1 | - | - | - | - |
| | Emulsifier | Sodium dodecyl diphenyl ether disulfonic acid | 1.7 | - | - | - | 2.0 | 2.0 | 0.6 | - | - | 0.4 | - |
| | | Sodium dodecyl sulfate | - | 1.7 | 1.7 | 1.7 | - | - | - | 1.7 | 1.7 | - | - |

EP 4 394 003 A1

15

| No. | | | Ex. 1 | Ex. 2 | Ex. 3 | Ex. 4 | Comp. Ex. 1 | Comp. Ex. 2 | Comp Ex. 3 | Comp. Ex. 4 | Comp. Ex. 5 | Ex, 5 Core | Ex, 5 Shell |
|---|---|---|---|---|---|---|---|---|---|---|---|---|---|
| | Polymerization initiator | Potassium persulfate | 0.5 | 1.0 | 1.0 | 1.0 | - | - | 0.3 | 1.0 | 1.0 | - | - |
| | | Sodium persulfate | - | - | - | - | 0.3 | 0.3 | - | - | - | - | - |
| | | Ammonium persulfate | - | 0.2 | 0.2 | 0.2 | - | - | - | 0.2 | 0.2 | 0.5 | 0.5 |
| Tg (°C) | | | 50 | 22 | 20 | 25 | 24 | 24 | 3 | -35 | -30 | 10 | 212 |
| Evaluations | | Adhesive properties | Good | Good | Good | Good | Good | Good | Good | Good | Good | Good | |
| | | Mineral oil resistance (toluene) | Good | Good | Good | Good | Bad | Bad | Bad | Fair | Bad | Good | |
| | | Mineral oil resistance (hexane) | Good | Good | Good | Good | Good | Good | Bad | Good | Good | Good | |
| | | Bending resistance | Fair | Fair | Fair | Good | Bad | Bad | Bad | Fair | Bad | Bad | |
| | | Blocking resistance | Good | Good | Good | Good | Good | Good | Good | Bad | Bad | Good | |

While the illustrative embodiments of the present invention are provided in the above description, such is for illustrative purpose only and it is not to be construed as limiting in any manner. Modification and variation of the present invention that will be obvious to those skilled in the art is to be covered by the following claims.

Industrial Applicability

The mineral-oil-resistance-imparting coating material and laminate of the present invention are suitably used in a packaging material.

**Claims**

1. A mineral-oil-resistance-imparting coating material comprising:

   a copolymer of a monomer composition containing a nitrile-group-containing unsaturated ethylenic monomer and a carboxy-group-containing unsaturated ethylenic monomer; and
   an aqueous solvent in which the copolymer is dissolved and/or dispersed,

   wherein a content ratio of the nitrile-group-containing unsaturated ethylenic monomer is 21% by mass or more and 70% by mass or less, and a content ratio of the carboxy-group-containing unsaturated ethylenic monomer is 3% by mass or more and 10% by mass or less to the total amount of the monomer composition.

2. The mineral-oil-resistance-imparting coating material according to claim 1, wherein the copolymer has a glass-transition temperature of -30°C or more and 100°C or less.

3. A laminate comprising:

   recycled paper, and
   a coating layer of the mineral-oil-resistance-imparting coating material according to claim 1, the coating layer being formed on at least one side of the recycled paper.

## INTERNATIONAL SEARCH REPORT

| International application No. |
| --- |
| **PCT/JP2022/030964** |

### A. CLASSIFICATION OF SUBJECT MATTER

**C09D 5/00**(2006.01)i; **C09D 157/12**(2006.01)i; **D21H 19/20**(2006.01)i
FI: C09D157/12; C09D5/00 Z; D21H19/20 D; D21H19/20 A

According to International Patent Classification (IPC) or to both national classification and IPC

### B. FIELDS SEARCHED

Minimum documentation searched (classification system followed by classification symbols)

C09D5/00; C09D157/12; D21H19/20

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X | JP 06-079964 A (OJI YUKA SYNTHETIC PAPER CO., LTD.) 22 March 1994 (1994-03-22) claims, paragraphs [0006], [0010], [0011], examples | 1-2 |
| A | claims, paragraphs [0006], [0010], [0011], examples | 3 |
| X | JP 2001-072935 A (EASTMAN KODAK CO.) 21 March 2001 (2001-03-21) paragraphs [0057], [0083]-[0085], [0087] | 1-2 |
| A | paragraphs [0057], [0083]-[0085], [0087] | 3 |
| A | JP 2015-500927 A (BASF SE) 08 January 2015 (2015-01-08) entire text, all drawings | 1-3 |
| A | JP 2014-520041 A (BASF SE) 21 August 2014 (2014-08-21) entire text, all drawings | 1-3 |
| A | JP 2014-516884 A (BASF SE) 17 July 2014 (2014-07-17) entire text, all drawings | 1-3 |

☐ Further documents are listed in the continuation of Box C.    ☑ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **04 October 2022** | **15 November 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2022/030964**

| Patent document cited in search report | | | Publication date (day/month/year) | Patent family member(s) | | | Publication date (day/month/year) |
|---|---|---|---|---|---|---|---|
| JP | 06-079964 | A | 22 March 1994 | (Family: none) | | | |
| JP | 2001-072935 | A | 21 March 2001 | US | 6221546 | B1 | |
| | | | | columns 10, 16, table 1 | | | |
| | | | | EP | 1069471 | A1 | |
| | | | | CN | 1281159 | A | |
| JP | 2015-500927 | A | 08 January 2015 | US | 2015/0274350 | A1 | |
| | | | | entire text, all drawings | | | |
| | | | | WO | 2013/083504 | A1 | |
| | | | | EP | 2788549 | A1 | |
| | | | | CA | 2857715 | A | |
| | | | | CN | 103975107 | A | |
| | | | | KR | 10-2014-0106644 | A | |
| | | | | BR | 112014013066 | A | |
| JP | 2014-520041 | A | 21 August 2014 | WO | 2012/163821 | A1 | |
| | | | | entire text, all drawings | | | |
| | | | | EP | 2714391 | A1 | |
| | | | | AU | 2012264906 | A | |
| | | | | CA | 2835725 | A | |
| | | | | CN | 103547450 | A | |
| | | | | MX | 2013013382 | A | |
| | | | | RU | 2013158463 | A | |
| | | | | ZA | 201309720 | B | |
| | | | | BR | 112013030517 | A | |
| JP | 2014-516884 | A | 17 July 2014 | WO | 2012/163749 | A2 | |
| | | | | entire text, all drawings | | | |
| | | | | EP | 2714990 | A2 | |
| | | | | AU | 2012264927 | A | |
| | | | | CA | 2835273 | A | |
| | | | | CN | 103547735 | A | |
| | | | | MX | 2013013615 | A | |
| | | | | RU | 2013158460 | A | |
| | | | | ZA | 201309722 | B | |
| | | | | BR | 112013030513 | A | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2015500927 A